# EUROPEAN PATENT APPLICATION

(11) **EP 4 589 900 A1**
(43) Date of publication of application: **23.07.2025**
(21) Application number: 22958843.9
(22) Date of filing: 16.09.2022
(51) Int. Cl.: H04L 27/26, H04B 7/06, H04B 7/08

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); OKUMURA, Mamoru, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/034738
(87) International publication number: WO 2024/057523

(57) **Abstract**

A terminal according to one aspect of the present disclosure includes: a receiving section that receives a MAC CE (MAC Control Element) including information related to respective active transmission configuration indication states associated with a serving cell and one or more candidate cells corresponding to the serving cell; and a control section that determines the TCI state corresponding to the serving cell and the TCI state corresponding to each of the one or more candidate cells, based on the MAC CE. A TCI state to be activated by the MAC CE is associated with a candidate cell corresponding at least to a same frequency domain as that of the serving cell.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of Rel. 16/5G or later), communication is controlled based on inter-cell mobility with a plurality of cells including a non-serving cell or inter-cell mobility using a plurality of transmission/reception points (for example, multi-TRP (MTRP)).

However, in a case of applying inter-cell mobility, how to control the UL transmission (for example, control of timing advance, cell switch, and the like) is a problem. When inter-cell mobility cannot be performed appropriately, communication quality may deteriorate.

The present disclosure has been made in view of this respect, and an object of the present disclosure is to provide a terminal, a radio communication method, and a base station that enable appropriate control of communication even when inter-cell mobility is performed.

### Solution to Problem

A terminal according to one aspect of the present disclosure includes: a receiving section that receives a MAC CE (MAC Control Element) including information related to respective active transmission configuration indication (TCI) states associated with a serving cell and one or more candidate cells corresponding to the serving cell; and a control section that determines the TCI state corresponding to the serving cell and the TCI state corresponding to each of the one or more candidate cells, based on the MAC CE. A TCI state to be activated by the MAC CE is associated with a candidate cell corresponding at least to a same frequency domain as that of the serving cell.

### Advantageous Effects of Invention

According to one aspect of the present disclosure, communication can be appropriately controlled even when inter-cell mobility is performed.

### Brief Description of Drawings

[FIG. 1] FIG. 1A and FIG. 1B are diagrams to show examples of inter-cell mobility.
[FIG. 2] FIG. 2 is a diagram to show examples of switch between a serving cell and an additional cell by L1/L2 signaling.
[FIG. 3] FIG. 3 is a diagram to show an example of configuration examples 1 to 3 when candidate cells are supported.
[FIG. 4] FIG. 4A to FIG. 4C are diagrams to show respective examples of a case where switch to a candidate cell(s)/candidate cell group by L1/L2 signaling is performed in configuration examples 1 to 3 when candidate cells are supported.
[FIG. 5] FIG. 5 is a diagram to show an example of timing advance groups (TAGs) to which cells included in a cell group belong.
[FIG. 6] FIG. 6 is a diagram to show an example of a MAC CE for timing advance command.
[FIG. 7] FIG. 7A and FIG. 7B are diagrams to show examples of TAG IDs configured for serving cells and candidate cells.
[FIG. 8] FIG. 8 is a diagram to show an example of a case where L1/L2 inter-cell mobility is successful according to a first embodiment.
[FIG. 9] FIG. 9 is a diagram to show another example of the case where L1/L2 inter-cell mobility is successful according to the first embodiment.
[FIG. 10] FIG. 10 is a diagram to show an example of a case where L1/L2 inter-cell mobility fails according to the first embodiment.
[FIG. 11] FIG. 11 is a diagram to show another example of the case where L1/L2 inter-cell mobility fails according to the first embodiment.
[FIG. 12] FIG. 12A and Fig. 12B are diagrams to show examples of application of L1/L2 inter-cell mobility and L3 mobility according to a second embodiment.
[FIG. 13] FIG. 13A and FIG. 13B are diagrams to show another example of the application of L1/L2 inter-cell mobility and L3 mobility according to the second embodiment.
[FIG. 14] FIG. 14 is a diagram to show an example of activation of TCI states of a serving cell and candidate cells configured in the same frequency.
[FIG. 15] FIG. 15 is a diagram to show an example of activation of TCI states of serving cells and candidate cells according to a third embodiment.
[FIG. 16] FIG. 16 is a diagram to show an example of inter-frequency cell switch according to the third embodiment.
[FIG. 17] FIG. 17 is a diagram to show another example of the activation of TCI states of a serving cell and candidate cells according to the third embodiment.
[FIG. 18] FIG. 18 is a diagram to show another example of the activation of TCI states of serving cells and candidate cells according to the third embodiment.
[FIG. 19] FIG. 19 is a diagram to show another example of the activation of TCI states of serving cells and candidate cells according to the third embodiment.
[FIG. 20] FIG. 20 is a diagram for explaining configuration example #1 according to the third embodiment.
[FIG. 21] FIG. 21 is a diagram for explaining configuration example #2 according to the third embodiment.
[FIG. 22] FIG. 22 is a diagram to show an example of intra-cell multi-TRP configuration and inter-cell multi-TRP configuration for serving cells/candidate cells according to a fourth embodiment.
[FIG. 23] FIG. 23 is a diagram to show an example of a schematic structure of a radio communication system according to one embodiment.
[FIG. 24] FIG. 24 is a diagram to show an example of a structure of a base station according to one embodiment.
[FIG. 25] FIG. 25 is a diagram to show an example of a structure of a user terminal according to one embodiment.
[FIG. 26] FIG. 26 is a diagram to show an example of a hardware structure of the base station and the user terminal according to one embodiment.
[FIG. 27] FIG. 27 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Inter-cell Mobility)

For NR, it is studied that one or a plurality of transmission/reception points (TRPs) (multi-TRP (MTRP)) perform DL transmission to a UE. It is also studied that the UE performs UL transmission to the one or plurality of TRPs.

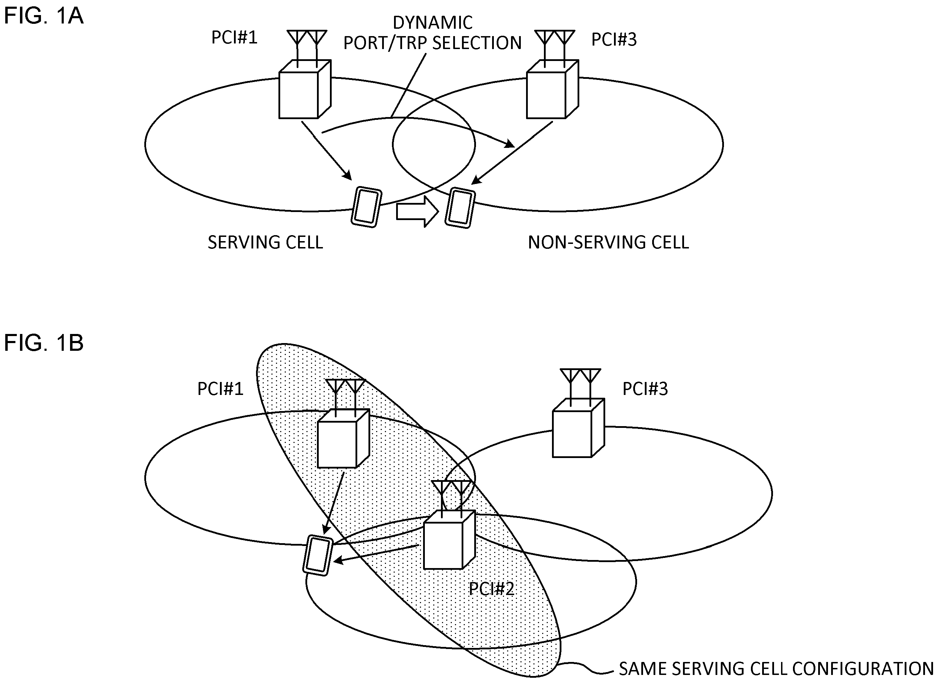

It is considered that a UE receives channels/signals from a plurality of cells/TRPs in inter-cell mobility (for example, L1/L2 inter cell mobility) (see FIGS. 1A and 1B).

FIG. 1A shows an example of inter-cell mobility with cells including a non-serving cell (for example, Single-TRP inter-cell mobility). A UE may be configured with one TRP (or a single TRP) in each cell. Here, shown is a case where the UE receives channels/signals from a base station/TRP of cell #1 being a serving cell, and a base station/TRP of cell #3 being not a serving cell (non-serving cell). For example, this corresponds to a case where the UE switches from cell #1 to cell #3 (for example, fast cell switch).

In this case, selection of a port (for example, an antenna port)/TRP or may be performed dynamically. The selection of a port (for example, an antenna port)/TRP or may be performed based on a TCI state indicated or updated by DCI/MAC CE. Here, shown is a case of supporting configuration of different physical cell IDs (for example, PCIs) for cell #1 and cell #3.

FIG. 1B shows an example of a multi-TRP scenario (for example, inter-cell mobility in a case of using multi-TRP (Multi-TRP inter-cell mobility)). A UE may be configured with a plurality of (for example, two) TRPs (or different CORESET pool indices) in each cell. Here, shown is a case where the UE receives channels/signals from TRP #1 and TRP 2. Here, also shown is a case where TRP #1 corresponds to physical cell ID (PCI) #1 and TRP #2 corresponds to PCI #2.

The multi-TRP (for example, TRPs #1 and #2) may be connected via ideal/non-ideal backhaul to exchange information, data, and the like. Each TRP of the multi-TRP may transmit the same or a different codeword (Code Word (CW)) and the same or a different layer. As one mode of multi-TRP transmission, non-coherent joint transmission (NCJT) may be employed as shown in FIG. 1B. Here, shown is a case where NCJT is performed between TRPs corresponding to different PCIs. Note that the same serving cell configuration may be applied/configured for TRP #1 and TRP #2.

It may be defined that a plurality of PDSCHs (multi-PDSCH) subjected to NCJT partially or completely overlap with respect to at least one of time and frequency domains. In other words, a first PDSCH from TRP #1 and a second PDSCH from TRP #2 may overlap in terms of at least one of time and frequency resources. The first PDSCH and the second PDSCH may be used for transmission of the same TB or may be used for transmission of different TBs.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI, single PDCCH)) (single-master mode). The one piece of DCI may be transmitted from one TRP of the multi-TRP. A structure using one piece of DCI in multi-TRP may be referred to as single-DCI based multi-TRP (mTRP/MTRP).

The plurality of PDSCHs from the multi-TRP may be scheduled by using a plurality of respective pieces of DCI (multi-DCI (M-DCI), multi-PDCCH (multiple PDCCHs)). The plurality of pieces of DCI may be transmitted from respective TRPs of the multi-TRP. A structure using a plurality of pieces of DCI in multi-TRP may be referred to as multi-DCI based multi-TRP (mTRP/MTRP).

The UE may assume to transmit, to the different TRPs, separate CSI reports related to the respective TRPs. Such CSI feedback may be referred to as separate feedback, separate CSI feedback, and the like. In the present disclosure, "separate" may be interchangeably interpreted as "independent."

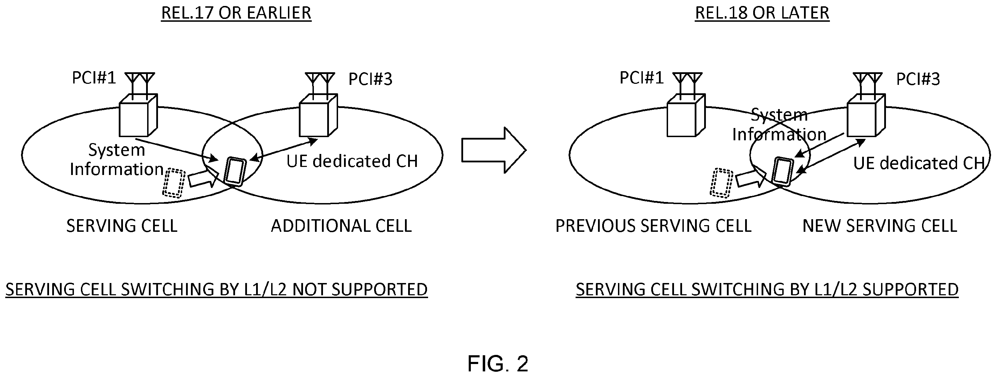

In Rel-17 NR, it is assumed that beam indication to TCI states associated with different PCIs by a MAC CE/DCI is supported. Meanwhile, in Rel-18 NR or later versions, it is assumed that serving cell switch (for example, indication of change of a serving cell to a cell having a different PCI) by L1/L2 signaling (for example, DCI/MAC CE) is supported (see FIG. 2).

FIG. 2 shows a case where a UE performs cell switch from a serving cell to an additional cell (or also referred to as a candidate cell and a target cell), based on a cell switch indication from a base station.

### (Candidate Cell)

It is also assumed that, in inter-cell mobility, one or a plurality of candidate cells are configured/managed for each serving cell.

For example, one or more candidate cells with information being restricted (for example, for which a UE is notified only of one or some of parameters) may be configured in a certain higher layer parameter (for example, ServingCellConfig) (Alt. 1). This may be configured similarly to inter-cell beam management (inter-cell BM) for existing systems (for example, Rel. 17).

Alternatively, a complete configuration (for example, ServingCellConfig) of one or more candidate cells may be configured, and the candidate cell(s) may be associated with each serving cell (Alt. 2). For example, a framework for carrier aggregation configuration (for example, CA configuration framework) or a framework for CHO (Conditional Handover)/CPC (Conditional PSCell Change) configuration may be reused.

In Alt. 1/2, activation/deactivation of a candidate cell(s) may be controlled by a MAC CE/DCI.

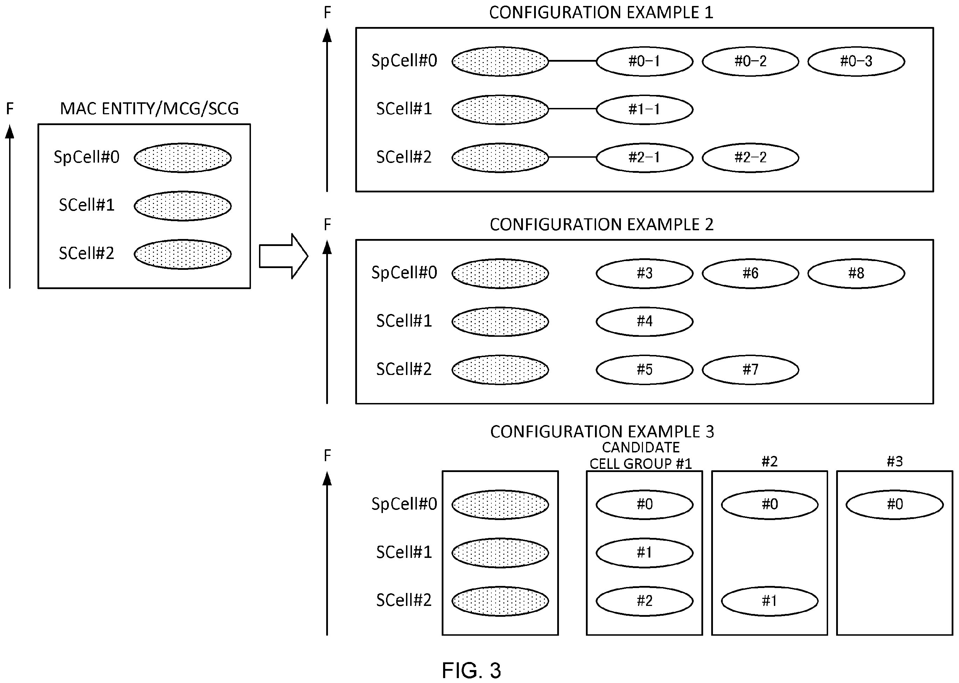

As configuration of candidate cells, at least one of configuration example 1 to configuration example 3 below may be used (see FIG. 3). Here, shown are examples of configuration/association of candidate cells (or additional cells) for serving cells/cell group when SpCell #0, SCell #1, and SCell #2 are configured as the serving cells. Configuration example 1 to configuration example 3 below are examples, and the number of cells, association for each cell, and the like are not limited to these and may be changed appropriately. Alternatively, another configuration example(s) may be supported/employed in addition to/instead of configuration example 1 to configuration example 3.

Configuration example 1 shows a case where one or more candidate cells are associated with/configured for each serving cell (see FIG. 3). Specifically, shown is a case where candidate cells #0-1, #0-2, and #0-3 are associated with SpCell #0, candidate cell #1-1 is associated with SCell #1, and candidate cells #2-1 and #2-2 are associated with SCell #2. Information related to this association may be configured for/indicated to a UE by a base station by RRC/MAC CE/DCI.

Configuration example 2 shows a case where candidate cells are associated with/configured for a MAC entity/MCG/SCG (see FIG. 3). Specifically, shown is a case where candidate cells #3 to #8 are associated with the MAC entity/MCG/SCG. In this case, instead of a candidate cell(s) being associated with each serving cell, the candidate cells are configured for the MAC entity or cell group (for example, an MCG/SCG). Information related to a candidate cell(s) to be configured for each cell may be configured for/indicated to a UE by a base station by RRC/MAC CE/DCI.

In configuration example 3, one or more candidate cell groups may be configured (see FIG. 3). Specifically, shown is a case where candidate cell group #1 including candidate cells #0 to #2, candidate cell group #2 including candidate cells #0 and #1, and candidate cell group #3 including candidate cell #0 are configured. Each candidate cell group includes one or more candidate cells. Each candidate cell included in the candidate cell group may be associated with at least one serving cell. Information related to the candidate cell(s) may be configured for/indicated to a UE by a base station by RRC/MAC CE/DCI.

In existing systems (for example, Rel. 17), L1 beam indication for a TCI state related to an additional PCI (or an additional cell) (for example, indication by a TCI state field of DCI) is supported.

It is assumed, in Rel. 18 or later versions, that a new L1/L2 signal (for example, DCI/MAC CE) indicating switch of a serving cell (for example, serving cell switch) is supported. It is assumed that, as the indication, at least one of implicit indication and explicit indication is supported. The implicit indication may mean that a certain CORESET is updated to a TCI state associated with an additional PCI by a MAC CE, for example. The explicit indication may mean that cell switch is directly indicated by DCI/MAC CE.

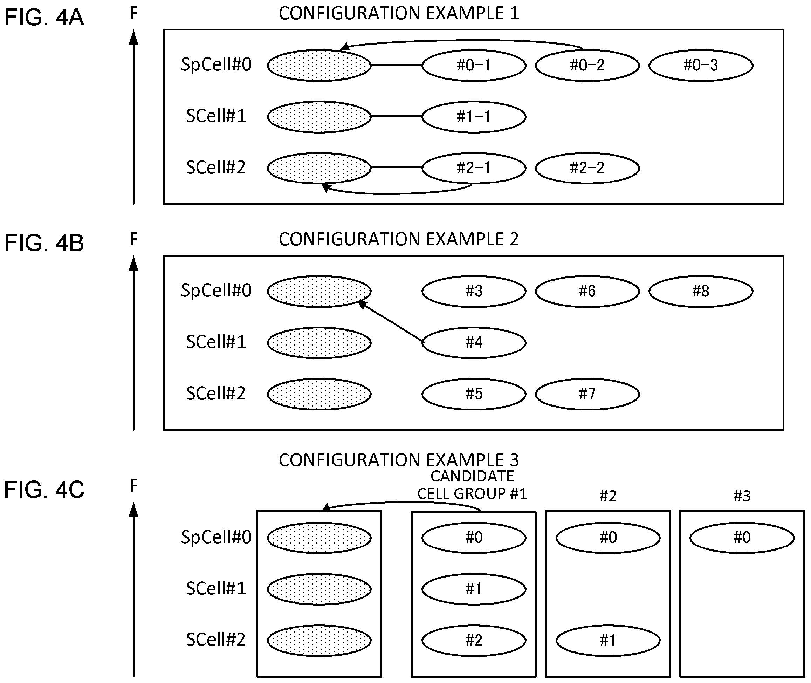

For example, in configuration example 1 of candidate cells, a certain candidate cell may be specified as a serving cell (or indicated for switching with a serving cell) via L1/L2 signaling. FIG. 4A shows a case where candidate cell #0-2 turns to be an SpCell of the MCG/SCG (SpCell #0 and candidate cell #0-2 are switched) by L1/L2 signaling. Also shown is a case where candidate cell #2-1 turns to be an SCell of an MCG/SCG (SCell #2 and candidate cell #2-1 are switched) by L1/L2 signaling.

Alternatively, in configuration example 2 of candidate cells, a certain candidate cell may be specified as a serving cell (or indicated for switching with a serving cell) via L1/L2 signaling. FIG. 4B shows a case where candidate cell #4 turns to be an SpCell of an MCG/SCG (SpCell #0 and candidate cell #4 are switched) by L1/L2 signaling.

Alternatively, in configuration example 3 of candidate cells, a certain candidate cell group (or one or more candidate cells included in the certain candidate cell group) may be changed/updated to a serving cell group via L1/L2 signaling. FIG. 4C shows a case where candidate cell group #1 (or candidate cells #0 to #2 included in candidate cell group #1) turns to be a serving cell group (or the serving cell group and candidate cell group #1 are switched) by L1/L2 signaling.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

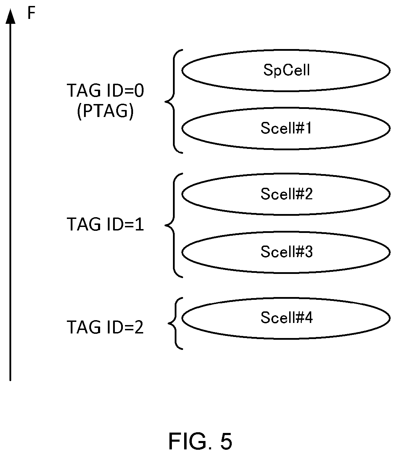

In existing systems (for example, Rel-16 NR), configuration of four TAGs at maximum (for example, MCG/SCG) is supported for each cell group (see FIG. 5). FIG. 5 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command is signaled from a radio base station to the UE on a MAC layer. The UE controls a certain timer (for example, a TA timer), based on reception of the TA command.

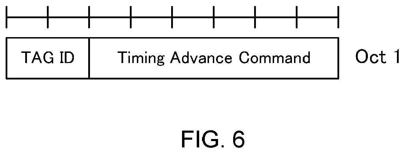

A MAC CE for timing advance command may have a structure including a field for timing advance group index (for example, TAG ID) and a field for timing advance command (see FIG. 6). The TAG ID field is used for indication of the TAG ID of an addressed TAG. The timing advance command field may indicate an index value T_{A} (0, 1, 2, ..., 63) to be used for control of the amount of timing adjustment to be applied by the MAC entity.

A parameter corresponding to each TAG ID may be configured by a higher layer parameter. For example, a parameter such as a time alignment timer (for example, timeAlignmentTimer) corresponding to each TAG ID may be configured. Alternatively, a TAG ID may be configured for each serving cell by a higher layer parameter (for example, tag-ID included in ServingCellConfig). Note that each TAG ID/parameter may be updated by a MAC CE after being configured by a higher layer parameter.

The time alignment timer may be maintained for UL time alignment. In Rel. 17, a time alignment timer may be configured/associated for each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a certain value (N_{TA}) is maintained for the indicated TAG, the MAC entity uses the timing advance command for the indicated TAG or starts or restarts the time alignment timer related to the indicated TAG. The certain value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, certain operation for PTAG is employed when a timing advance timer corresponding to a PTAG expires, and certain operation for STAG may be employed when a timing advance timer for STAG expires.

For example, when such a time alignment timer expires, the following operation (for example, the certain operation for PTAG/certain operation for STAG) may be performed.

### {Certain Operation for PTAG}

In a case where the time alignment timer is associated with a PTAG,
- flush all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### {Certain Operation for STAG}

In a case where the time alignment timer is associated with an STAG, for all serving cells belonging to the TAG,
- flush all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

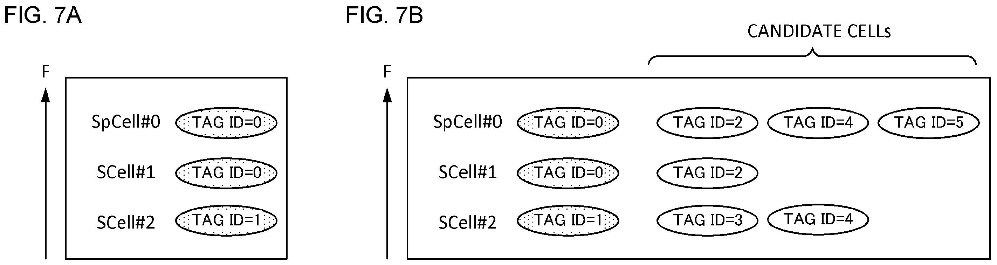

As described above, when candidate cells are configured/defined, it is assumed that each candidate cell is associated with a TAG (see FIGS. 7A and 7B). FIG. 7A shows an example of TAGs (or configuration of TAG IDs) for each cell group of an existing system (for example, Rel. 17 or earlier), and FIG. 7B shows an example of configuration of TAG IDs for respective candidate cell.

When candidate cells are configured/applied/supported, it is assumed that different serving cells/different candidate cells are associated with the same TAG as shown in FIG. 7B.

When TA of a candidate cell is acquired, a RACH (or a random access procedure) to the candidate cell may be supported.

As described above, when candidate cells are configured/applied/supported, it is assumed that inter-cell mobility (for example, switch/switching from a serving cell to a candidate cell (or an additional cell/target cell)) is performed, but how to perform control in such a case has not been sufficiently studied. When switch from a serving cell to a candidate cell (for example, inter-cell mobility) is not performed appropriately, communication quality may deteriorate.

The inventors of the present invention and the like focused on inter-cell mobility (for example, cell switch) in a case where a candidate cell (or an additional cell or a target cell) is configured/supported, studied an appropriate control method for the inter-cell mobility, and came up with the idea of the present embodiment.

Embodiments according to the present disclosure will be described in detail with reference to the drawings as follows. Note that the aspects (for example, cases) below may each be employed individually, or may be employed in combination of at least two.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the following embodiments, a "plurality of" and "two" may be interchangeably interpreted. A "TAG" and a "TAG ID" may be interchangeably interpreted. A "cell," a "CC," and a "carrier" may be interchangeably interpreted.

The following description may be applied in inter-cell mobility (for example, L1/L2 inter cell mobility) or may be applied in communication control other than inter-cell mobility. L1/L2 inter-cell mobility may be interpreted as at least one of cell switch and cell change.

### (Radio Communication Method)

### <First Embodiment>

In a first embodiment, an example of UE operation/base station operation in a case of having received (or after reception of) a cell switch indication will be described.

A base station may configure, for a UE, information related to a configuration of a plurality of candidate cells by higher layer signaling. The higher layer signaling may be RRC reconfiguration signaling, may be a higher layer parameter related to cells, or may be another higher layer parameter.

The base station may use a MAC CE/DCI to indicate, to the UE, serving cell change or switch. The UE performs a cell switch procedure/switch operation, based on a cell switch indication indicated by the MAC CE/DCI. The cell switch indication may be referred to as cell switch indication signaling or L1/L2 inter-cell mobility indication.

At least one of information related to a candidate cell to be a switch destination (for example, a candidate cell index or a physical cell ID (PCI)), information related to a serving cell to be a switch source, and information related to another candidate cell may be included in the MAC CE/DCI.

In the present disclosure, serving cell change may be interpreted as serving cell switch, serving cell switching, or L1/L2 cell switch. In the present disclosure, indicating serving cell change may be interpreted as activating/enabling serving cell change.

When the UE is indicated with serving cell change, the UE may assume that L1/L2 inter-cell mobility is configured at enabled.

When the UE has received information indicating serving cell change (or change to a candidate cell), the UE may change a serving cell configuration to a target cell (or the candidate cell), based on a cell configuration configured in advance by a higher layer parameter. The UE may assume a new beam/TCI state/spatial relation to receive DL transmission from the target cell. Information related to the new beam/TCI state/spatial relation may be configured for/indicated to the UE by the base station in advance by using a higher layer parameter (for example, a higher layer parameter related to a candidate cell).

When no information related to a new beam/TCI state/spatial relation is configured/indicated, the UE may assume a certain beam/TCI state/spatial relation. The certain beam/TCI state/spatial relation may be determined based on PRACH transmission of the target cell (or candidate cell). For example, the UE may determine/assume the certain beam/TCI state/spatial relation, based on the latest PRACH transmission associated with an SSB of the target cell.

When the UE has detected a MAC CE/DCI indicating serving cell change (or change to a candidate cell), the UE may change to a serving cell configured by the RRC configuration of a cell to be updated to (for example, the RRC configuration of the candidate cell), after a certain period. In the present disclosure, the certain period may be interpreted as a certain offset.

The certain period may be X ms or X symbol(s) after the detected MAC CE/DCI. Alternatively, the certain period may be Y ms/Y symbol(s) from HARQ-ACK feedback for the detected MAC CE/DCI. X and Y may be determined based on a UE capability/UE type, may be defined in a specification, or may be configured for the UE by the base station.

It is conceivable to control, when cell switch (for example, L1/L2 inter-cell mobility) has thus been successful, transmission and reception operation with the target cell as a serving cell. In this case, success/failure of cell switch may be defined as follows. Option 1A-1 to option 1A-3 describe examples of success of cell switch (for example, L1/L2 inter-cell mobility), while option 1B-1 to option 1B-2 describe examples of failure of cell switch (for example, L1/L2 inter-cell mobility).

### {Option 1A-1}

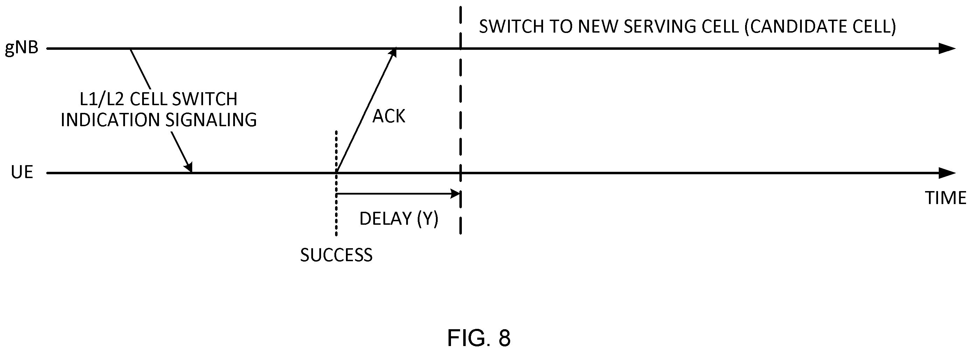

When the UE has transmitted an HARQ-ACK for a serving cell switch indication, this may mean success of cell switch to control UE operation/base station operation. The HARQ-ACK may mean an ACK (ACKnowledgement) (see FIG. 8) or may mean an ACK/NACK.

FIG. 8 shows a case where a serving cell switch indication (for example, L1/L2 cell switch indication signaling) is transmitted from the base station to the UE, and, when the UE transmits an ACK for the switch indication, this means success of the cell switch. Shown is a case where, switch to a new serving cell is controlled in this case, a certain period (for example, Y) after the success of the cell switch (for example, after the ACK transmission).

When the HARQ-ACK means an ACK, the UE need not mean success of the cell switch even when the UE has transmitted a NACK (before the ACK transmission). In other words, NACK feedback or retransmission of L1/L2 signaling may be present before the ACK transmission.

For example, when the serving cell switch indication is indicated by a MAC CE, it may be defined that a case where HARQ-ACK feedback for a PDSCH transmitting the MAC CE is an ACK indicates success of the serving cell switch.

When the serving cell switch indication is indicated by DCI, an ACK may have different definitions depending on whether or not DL assignment/UL assignment is included in the DCI.

For example, when DCI including DL assignment is used for the serving cell switch indication, it may be defined that a case where HARQ-ACK feedback for a PDSCH scheduled by the DCI is an ACK indicates success of the serving cell switch.

When DCI not including DL assignment/UL assignment is used for the serving cell switch indication, it may be defined that a case where HARQ-ACK feedback for the DCI (or a PDCCH that has transmitted the DCI) is an ACK indicates success of the serving cell switch. In this case, CRC to be added to the DCI may be scrambled by a certain RNTI (for example, an RNTI other than a C-RNTI) .

When DCI including UL assignment is used for the serving cell switch indication, a PUSCH scheduled by the DCI may be regarded as HARQ-ACK feedback with an ACK. In other words, the feedback by the PUSCH may be defined as success of the serving cell switch. Alternatively, a case where the base station has rescheduled a PUSCH having the same HPN (the same HPN with a toggled NDI) may be defined as success of the serving cell switch.

### {Option 1A-2}

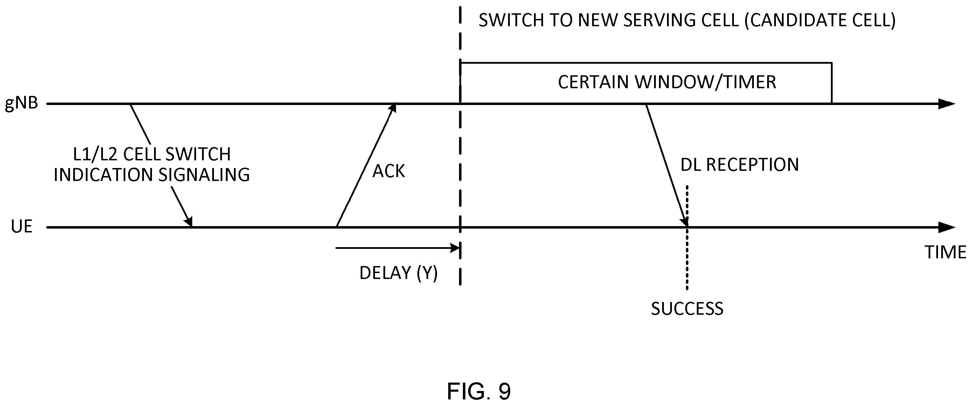

When the UE has received DL from a new target cell (or a candidate cell to be a change destination target) in a certain window/timer, this may mean success of cell switch to control UE operation/base station operation (see FIG. 9). The DL received by the UE may be interpreted as at least one of DL transmission, a DL signal, and a DL channel.

The certain window/timer may be started after transmission of an HARQ-ACK (for example, an ACK) for a serving cell switch indication or after the elapse of a certain period (for example, Y) from the HARQ-ACK transmission, for example. The start time of the certain window/timer is, of course, not limited to this. The certain window/timer (for example, at least one of the disclosure time (start slot, start symbol, or the like) and the length) may be defined in a specification or may be configured for/indicated to the UE by the base station by using an RRC parameter/MAC CE/DCI.

The DL received by the UE may be at least one of option 1A-2-1 to option 1A-2-3 below.

### <<Option 1A-2-1>>

The DL received by the UE may be a DL reference signal (for example, a DL-RS). For example, when the UE has received (or measured) a DL reference signal transmitted from a new target cell, this may mean success of the serving cell switch. The DL reference signal may be at least one of an SSB, a CSI-RS, and an indicated TCI state source RS transmitted from the new target cell.

### <<Option 1A-2-2>>

The DL received by the UE may be a DL channel (for example, a PDCCH/PDSCH) or downlink control information (for example, DCI). For example, when the UE has received (or decoded/detected/monitored) a DL channel/DCI transmitted from a new target cell, this may mean success of the serving cell switch. The DL channel (for example, a PDCCH/PDSCH) or the DCI may be a PDCCH/PDSCH corresponding to a certain format/type.

For example, when the UE has received DCI in a common search space (for example, a CSS), this may mean success of the serving cell switch.

Alternatively, when the UE has received a PDCCH/PDSCH having the same HARQ process ID as that of previous L1/L2 cell switch signaling, this may mean success of the serving cell switch. The previous L1/L2 cell switch signaling may have a toggled NDI (no MAC reset is assumed).

### <<Option 1A-2-3>>

The DL received by the UE may be explicit indication for confirming (or activating or enabling) the serving cell switch. The explicit indication may be an RRC parameter/MAC CE/DCI corresponding to the explicit indication, for example.

In at least one of option 1A-2-1 to option 1A-2-3, RACH transmission (or a RACH procedure) to a new target cell may be ended before the cell switch to acquire TA to the new target cell before the cell switch.

### {Option 1A-3}

When the UE has completed a random access procedure (or a RACH procedure) for a new target cell (or a candidate cell to be a change-destination target) in the certain window or timer, this may mean success of the cell switch to control UE operation/base station operation.

In option 1A-3, RACH transmission (or a RACH procedure) to a new target cell need not be performed, or TA need not be acquired, before the cell switch. In this case, the UE may perform a RACH procedure after switch to a new serving cell.

### {Option 1B-1}

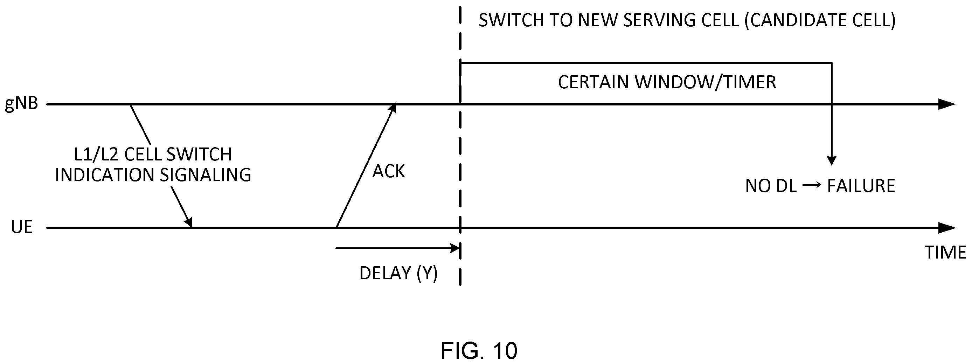

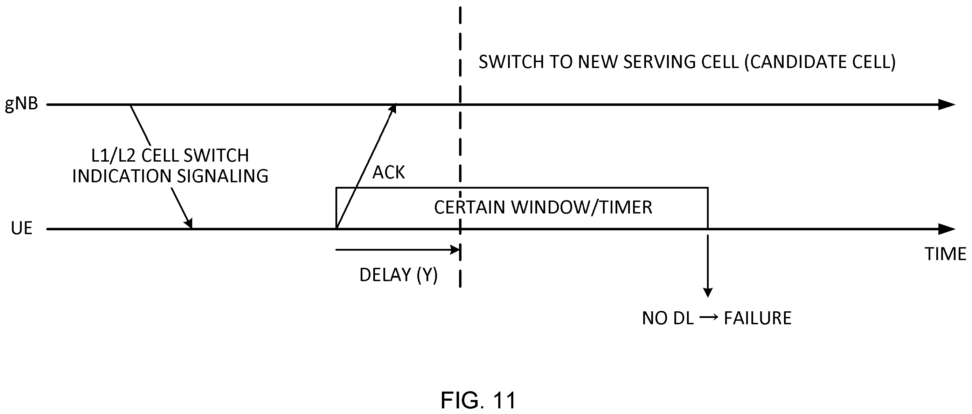

When certain DL fails to be received (after the UE has transmitted an HARQ-ACK (for example, an ACK) for the serving cell switch indication, or after the UE has applied switch to a new target cell) before end of the certain window/expiration of the certain timer (or in the certain window/timer), this may mean failure of the cell switch (see FIG. 10 and FIG. 11). The certain window/timer and the certain DL may be a window/timer and DL described in option 1A-2.

FIG. 10 shows a case where the UE fails to receive certain DL after transmission of an HARQ-ACK (for example, an ACK) for a serving cell switch indication before end of the certain window/expiration of the certain timer (or in the certain window/timer). FIG. 11 shows a case where the UE fails to receive certain DL after application of switch to a new target cell and before end of the certain window/expiration of the certain timer (or in the certain window/timer).

In this case, the UE may declare/make notification about/report failure of cell switch (for example, L1/L2 inter-cell mobility) or occurrence of a failure in cell switch (for example, L1/L2 inter-cell mobility).

The period (for example, the start time/length and the like) of the certain window/timer may be configured for the UE by the base station by an RRC parameter or may be included in a MAC CE/DCI for indicating the cell switch to be indicated to the UE by the base station. The start time may be a start slot or a start symbol.

### {Option 1B-2}

When the UE fails to complete a random access procedure (or a RACH procedure) to a new target cell before end of the certain window/expiration of the certain timer (or in the certain window/timer), this may mean failure of the cell switch. In this case, the UE may declare/make notification about/report failure of cell switch (for example, L1/L2 inter-cell mobility) or occurrence of a failure in cell switch (for example, L1/L2 inter-cell mobility).

When cell switch fails (for example, option 1B-1 or option 1B-2), the UE may apply UE operation described in at least one of option 1-1 to option 1-3 below.

### <<Option 1-1>>

The UE may return to an original serving cell (for example, a switch-source serving cell) and apply the last TCI state in the cell to monitor DL transmission (for example, a PDCCH).

When the UE fails to receive DL in the certain window/timer after transmission of an HARQ-ACK (for example, an ACK) for the serving cell switch indication (option 1B-1) or fails to complete a RACH procedure (option 1B-2), the UE has been successful at least in ACK transmission. In this case, the channel quality of the original serving cell may be good, which indicates that there is a possibility of appropriately performing communication (for example, DL reception).

### <<Option 1-2>>

The UE may perform RACH transmission (or a random access procedure) on a specific cell (for example, a certain cell). The specific cell may be at least one of an original serving cell (for example, a switch-source serving cell) and a new target cell. For example, a random access procedure at the time of radio link failure (RLF) may be reused.

### <<Option 1-3>>

The UE may perform RACH transmission (or a random access procedure) on any cell (for example, ayn cell). For example, a random access procedure performed by a UE in an idle state (UE in IDLE) may be reused.

UE capability may be introduced for different UE operations after a cell switch (for example, L1/L2 inter-cell mobility) failure.

### <Second Embodiment>

In a second embodiment, an example of UE operation/base station operation in a case where different mobility procedures (or cell change procedures) are supported will be described.

In Rel. 18 or later versions, a case where L1/L2 inter-cell mobility (for example, R18 L1/L2 inter cell mobility) and L3 mobility (for example, legacy L3 mobility) are supported is assumed. L3 mobility may be handover, CHO (for example, Conditional Handover), or CPC (Conditional PSCell Change), for example. In such a case, interaction between a plurality of (two, here) procedures (or presence or absence of collision/operation at the time of collision) need be controlled appropriately.

When a plurality of mobility procedures are supported, at least one of option 2-1 to option 2-4 below may be applied. A mobility procedure may be interpreted as a cell change procedure, a cell switch procedure, a cell switching procedure, or a cell change procedure. In the following description, first mobility (for example, L1/L2 inter-cell mobility) and second mobility (for example, L3 mobility) are used as an example of the plurality of mobility procedures. However, the mobility types are not limited to these. A procedure of an existing system (for example, Rel. 17 or an earlier version) (for example, a handover procedure) may be reused as the L3 mobility procedure.

### {Option 2-1}

Assume a case where the first mobility procedure (for example, an inter-L1/L2-cell cell switch procedure) is ongoing. The inter-L1/L2-cell cell switch procedure being ongoing may correspond to a case where a UE has already received signaling of an L1/L2 cell switch indication (and before cell switch completion), for example.

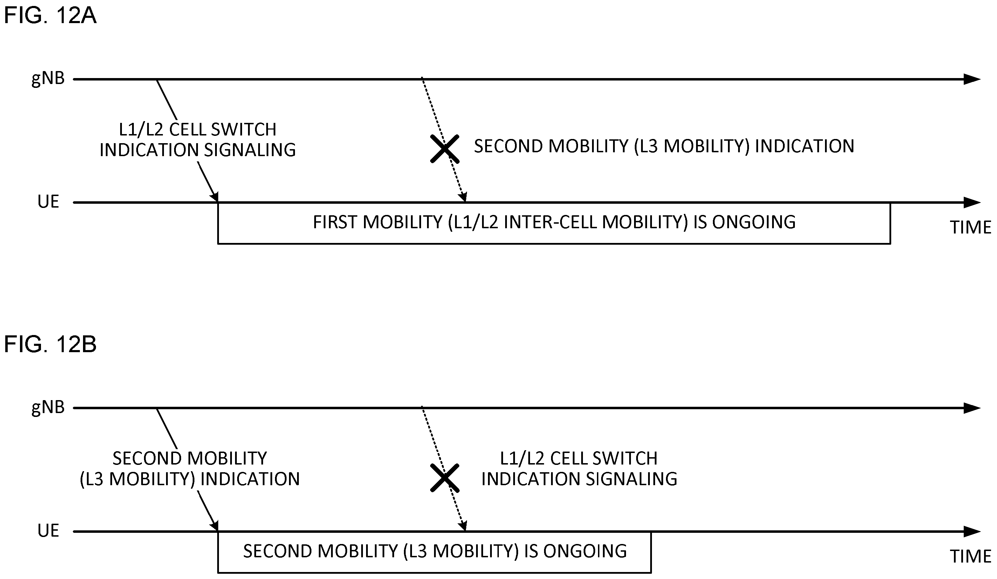

In this case, before completion (or success) of the L1/L2 cell switch procedure, the UE need not assume reception of a second mobility indication/execution of a second mobility procedure (see FIG. 12A). Before completion (or success) of the L1/L2 cell switch procedure may mean before success or failure of cell switch described in the first embodiment.

This allows a configuration that the second mobility is not performed while the first mobility (for example, the inter-L1/L2-cell cell switch procedure) is ongoing, which can prevent a case where two mobility procedures are performed simultaneously.

### {Option 2-2}

Assume a case where the second mobility procedure (for example, the L3 mobility procedure) is ongoing. In this case, a UE may assume not to receive a first mobility indication (for example, L1/L2 cell switch indication signaling) before completion of the L3 mobility procedure (for example, handover/CHO/CPC) (see FIG. 12B).

This allows a configuration that the first mobility (for example, the inter-L1/L2-cell switch procedure) is not performed while the second mobility (for example, a handover procedure) is ongoing, which can prevent a case where two mobility procedures are performed simultaneously.

### {Option 2-3}

When the first mobility procedure (for example, the inter-L1/L2-cell cell switch procedure) is ongoing, reception of a second mobility indication/execution of the second mobility procedure before completion (or success) of the L1/L2 cell switch procedure may be permitted/supported. In other words, collision of the first mobility procedure and the second mobility procedure may be permitted/supported.

When an L3 handover command is received (or when a UE determines that a condition for CHO/CPC is satisfied) before completion (or success) of the L1/L2 cell switch procedure, at least one of option 2-3-1 to option 2-3-3 below may be employed.

### <<Option 2-3-1>>

A mobility procedure to be applied may be selected based on the priorities corresponding to the mobility procedures. The priorities of the respective mobility procedures may be defined in a specification or may be configured for the UE by the base station by a higher layer parameter or the like.

For example, the UE may execute the first mobility procedure (for example, the inter-L1/L2-cell cell switch procedure). In other words, the UE may prioritize the first mobility procedure over the second mobility procedure, for execution. In this case, control may be performed not to execute (or to cancel) the second mobility procedure.

Alternatively, the UE may execute the second mobility procedure (for example, the L3 mobility procedure). In other words, the UE may prioritize the second mobility procedure over the first mobility procedure, for execution. In this case, control may be performed not to execute (or to cancel) the first mobility procedure.

### <<Option 2-3-2>>

A mobility procedure to be applied may be selected based on the indication (or start) timing/order of the mobility procedures.

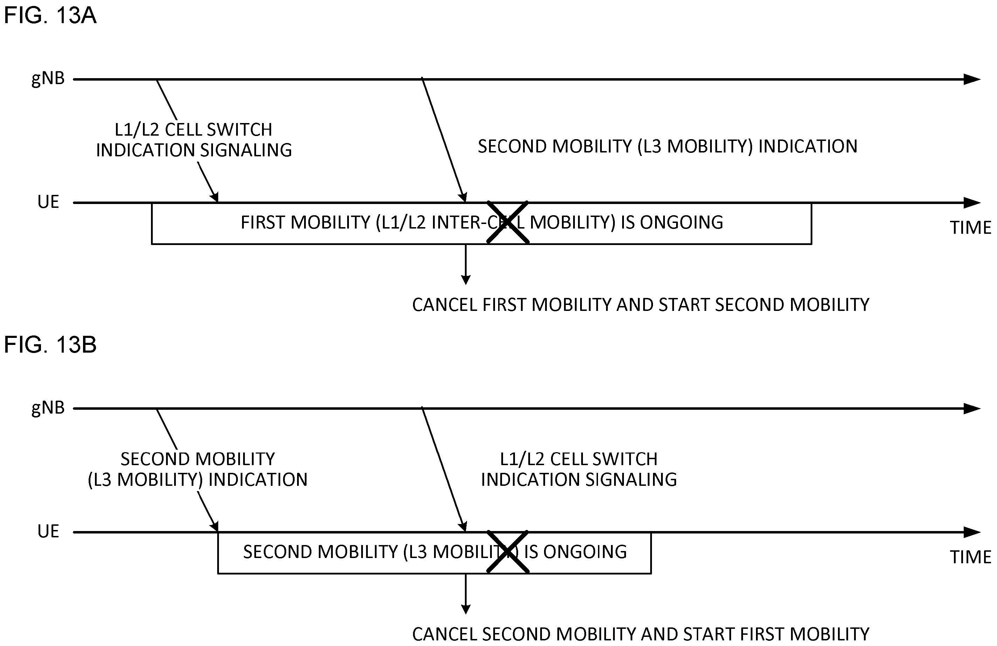

For example, the mobility procedure indicated (or started) later may be prioritized for execution. When reception of a second mobility indication/execution of the second mobility is performed while the first mobility is ongoing, the UE may perform control to cancel or stop the ongoing first mobility procedure and to execute the second mobility procedure indicated later (see FIG. 13A) .

Alternatively, the mobility procedure indicated (or started) first may be prioritized for execution. When reception of a second mobility indication/execution of the second mobility is performed while the first mobility is ongoing, the UE may perform control to continue the ongoing first mobility procedure and not to execute the second mobility procedure indicated later.

### <<Option 2-3-3>>

The UE may autonomously select a mobility procedure to execute.

### {Option 2-4}

When the second mobility procedure (for example, the L3 mobility procedure) is ongoing, reception of a first mobility indication (for example, L1/L2 cell switch indication signaling)/execution of the first mobility procedure before completion of the L3 mobility procedure (for example, handover/CHO/CPC) may be permitted/supported.

When the first mobility procedure (for example, the L1/L2 cell switch indication signaling) is received before completion (or success) of the second mobility procedure, at least one of option 2-4-1 to option 2-4-3 below may be applied.

### <<Option 2-4-1>>

A mobility procedure to be applied may be selected based on the priorities corresponding to the mobility procedures. The priorities of the respective mobility procedures may be defined in a specification or may be configured for the UE by the base station by a higher layer parameter or the like.

For example, the UE may execute the first mobility procedure (for example, the inter-L1/L2-cell cell switch procedure). In other words, the UE may prioritize the first mobility procedure over the second mobility procedure, for execution. In this case, control may be performed not to execute (or to cancel) the second mobility procedure.

Alternatively, the UE may execute the second mobility procedure (for example, the L3 mobility procedure). In other words, the UE may prioritize the second mobility procedure over the first mobility procedure, for execution. In this case, control may be performed not to execute (or to cancel) the first mobility procedure.

### <<Option 2-4-2>>

A mobility procedure to be applied may be selected based on the indication (or start) timing/order of the mobility procedures.

For example, the mobility procedure indicated (or started) later may be prioritized for execution. When a first mobility indication is received while the second mobility is ongoing, the UE may perform control to cancel or stop the ongoing second mobility procedure and to execute the first mobility procedure indicated later (see FIG. 13B).

Alternatively, the mobility procedure indicated (or started) first may be prioritized for execution. When a first mobility indication is received while the second mobility is ongoing, the UE may perform control to continue the ongoing second mobility procedure and not to execute the first mobility procedure indicated later.

### <<Option 2-4-3>>

The UE may autonomously select a mobility procedure to execute.

In option 2-1 to option 2-4, cases where the handover procedure (for example, the L3 handover command procedure) and the CHO/CPC procedure (for example, the L3 CHO/CPC procedure) are included as L3 mobility are described but are not restrictive. The handover procedure (for example, the L3 handover command procedure) and the CHO/CPC procedure (for example, the L3 CHO/CPC procedure) may be performed as separate procedures.

For interaction between the first mobility and the second mobility, a different UE capability may be introduced/supported for each option above.

### <Third Embodiment>

In a third embodiment, an example of (indication/activation of a TCI state related to) an additional PCI will be described. In the present disclosure, an additional PCI may be interpreted as an additional cell, a candidate cell, and a target cell.

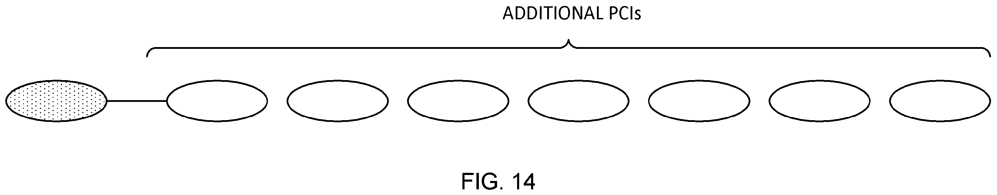

In Rel-17 inter-cell beam management, it is supported that a MAC CE can activate eight TCI states at maximum and that one or some of the TCI states are associated with additional PCIs. Note that the frequency is limited to the same frequency as that of the serving cell (see FIG. 14).

FIG. 14 shows a case where seven additional PCIs (or candidate cells, target cells, or additional cells) at maximum are configured in the same frequency as that of a serving cell in inter-cell beam management (ICBM) supported in Rel. 17. A MAC CE can indicate activation of TCI states in the same frequency. The frequency may be interpreted as a frequency domain or a frequency band.

In L1/L2 inter-cell mobility in Rel. 18 or later versions, it is also assumed, in consideration of an inter-frequency scenario, to support that a MAC CE activates TCI states associated with additional PCIs, in a frequency different from that of a serving cell. As indication/activation of TCI states in L1/L2 inter-cell mobility, at least one of option 3-1 to option 3-3 below may be employed.

### {Option 3-1}

In L1/L2 inter-cell mobility, TCI states activated by a MAC CE may be associated with additional PCIs in the same frequency as that of the serving cell. The MAC CE may be a MAC CE for dynamic beam indication.

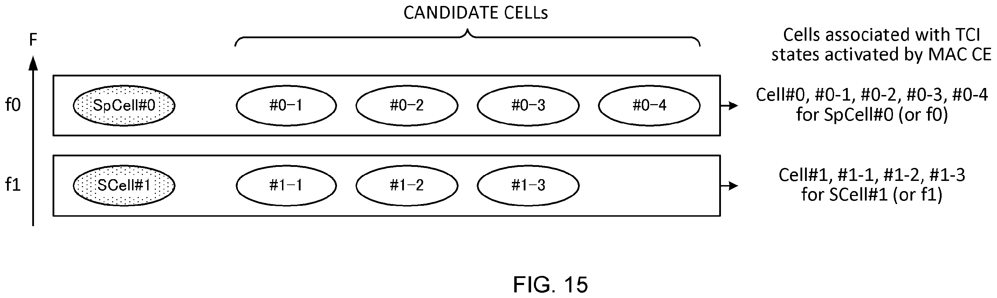

FIG. 15 shows an example that TCI states activated by a MAC CE are associated with additional PCIs corresponding to the same frequency as that of a serving cell.

Here, shown is a case where SpCell #0 is configured in a first frequency (for example, f0) and that TCI states activated by a MAC CE for SpCell #0 are associated with SpCell #0, cell #0-1, cell #0-2, cell #0-3, and cell #0-4.

Also shown is a case where SCell #1 is configured in a second frequency (for example, f1) and that TCI states activated by a MAC CE for SCell #1 are associated with SCell #1, cell #1-1, cell #1-2, and cell #1-3.

Cells of different frequencies are different in cell configuration and frequency. Hence, when dynamic beam indication between such cells is supported, UE operation may be complicated. In this case, a MAC CE can activate TCI states in the same frequency for each serving cell.

L1/L2 cell switch may be performed in a frequency or between frequencies. Which one of intra-frequency cell switch and inter-frequency cell switch is applied may be configured for the UE by the base station by higher layer signaling. Alternatively, which one of intra-frequency cell switch and inter-frequency cell switch is applied may be determined based on UE capability information instead of (or in addition to) higher layer signaling.

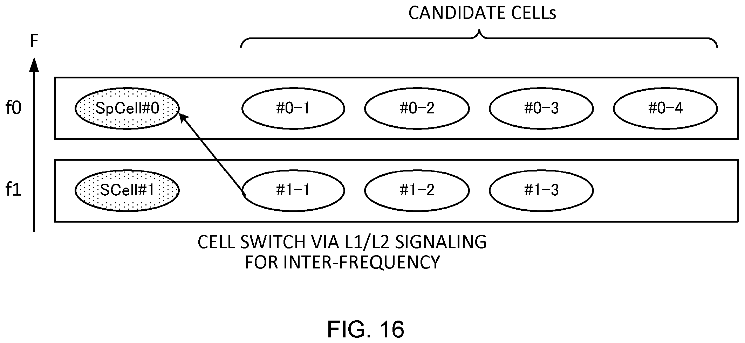

FIG. 16 shows an example of inter-frequency cell switch. Here, when cell switch is indicated by L1/L2 cell switch signaling, a new target cell of a different frequency from that of a current serving cell may be indicated for a serving cell. In this case, a TCI state(s) corresponding to the target cell may be activated by a MAC CE of a different frequency.

For example, the UE may be indicated with cell switch from SpCell #0 to any of candidate cells #1-1 to #1-3 corresponding to the different frequency from that of this SpCell. In this case, the UE may assume that the TCI state corresponding to a cell after the switch (for example, candidate cell #1-1) is a TCI state activated by a MAC CE corresponding to SCell #1.

### {Option 3-2}

In L1/L2 inter-cell mobility, TCI states activated by a MAC CE for a serving cell may be associated with at least either additional PCIs in the same frequency as that of the serving cell or additional PCIs in a different frequency from that of the serving cell. The MAC CE may be a MAC CE for dynamic beam indication.

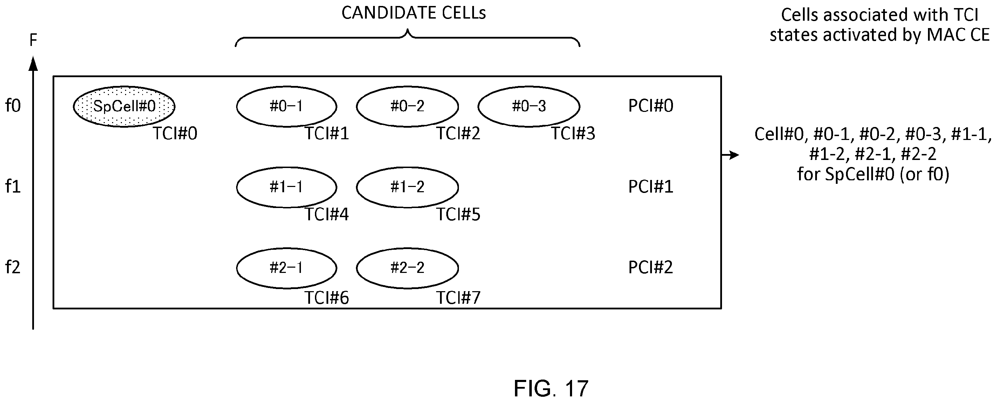

FIG. 17 shows an example of a case of supporting that a MAC CE activates TCI states associated with additional PCIs corresponding to the same frequency as that of a serving cell and TCI states associated with additional PCIs corresponding to frequencies different from that of the serving cell.

FIG. 17 shows a case where candidate cells #0-1, #0-2, and #0-3 are configured in the same frequency (f0) as that of SpCell #0, candidate cells #1-1 and #1-2 are configured in a frequency f1, which is different from that of SpCell #0, and candidate cells #2-1 and #2-2 are configured in a frequency f2, which is different from that of SpCell #0. Also shown is a case where SpCell #0 and candidate cells #0-1, #0-2, and #0-3 correspond to PCI #0, candidate cells #1-1 and #1-2 correspond to PCI #1, and candidate cells #2-1 and #2-2 correspond to PCI #2.

Here, shown is a case where TCI states activated by a MAC CE for SpCell #0 are associated with SpCell #0, candidate cells #0-1, #0-2, #0-3, #1-1, #1-2, #2-1, and #2-2. More specifically, shown is a case where the TCI state (here, TCI #0) of SpCell #0, the TCI state (here, TCI #1) of candidate cell #0-1, the TCI state (here, TCI #2) of candidate cell #0-2, the TCI state (here, TCI #3) of candidate cell #0-3, the TCI state (here, TCI #4) of candidate cell #1-1, the TCI state (here, TCI #5) of candidate cell #1-2, the TCI state (here, TCI #6) of candidate cell #2-1, and the TCI state (here, TCI #7) of candidate cell #2-2 are activated by a MAC CE (for example, a MAC CE corresponding to SpCell #0).

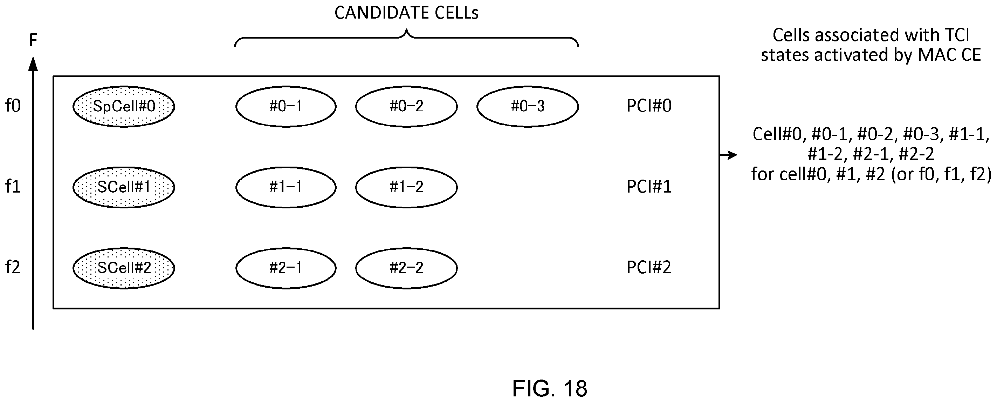

When a plurality of serving cells are configured (for example, carrier aggregation), the plurality of serving cells may share TCI states activated by one or more MAC CEs (for example, one or more MAC CEs corresponding to different frequencies/cells) (see FIG. 18).

FIG. 18 shows a case where SpCell #0 and candidate cells #0-1, #0-2, and #0-3 are configured in a first frequency domain (f0), SCell #1 and candidate cells #1-1 and #1-2 are configured in a second frequency domain (f1), and SCell #2 and candidate cells #2-1 and #2-2 are configured in a third frequency domain (f2). Also shown is a case where SpCell #0 and candidate cells #0-1, #0-2, and #0-3 correspond to PCI #0, SCell #1 and candidate cells #1-1 and #1-2 correspond to PCI #1, and SCell #2 and candidate cells #2-1 and #2-2 correspond to PCI #2.

Here, shown is a case where TCI states activated by a MAC CE for SpCell #0, SCell #1, and SCell #2 are associated with SpCell #0, candidate cells #0-1, #0-2, #0-3, #1-1, #1-2, #2-1, and #2-2.

TCI states of cells of different frequencies may be activated by a MAC CE. Alternatively, a serving cell(s)/candidate cell(s) sharing a MAC CE may be grouped together. Such a group of cells with TCI states activated by a common MAC CE may be configured by higher layer signaling or may be defined in a specification.

### {Option 3-3}

TCI states activated by a MAC CE for dynamic beam indication (or cell switch) may be associated with additional PCIs of the same frequency, and an actual frequency (or PCI) may conform to the frequency (or a cell index or a reference signal resource index (for example, a resource RS index)) of a source serving cell or a target cell.

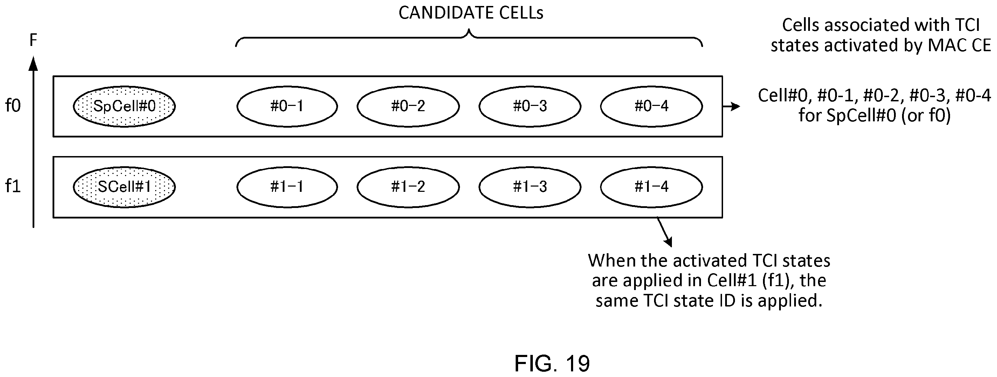

FIG. 19 shows an example that TCI states activated by a MAC CE are associated with additional PCIs corresponding to the same frequency as that of a serving cell.

Here, shown is a case where SpCell #0 and candidate cells #0-1, #0-2, #0-3, and #0-4 are configured in a first frequency (for example, f0) and that TCI states activated by a MAC CE for SpCell #0 (or f0) are associated with SpCell #0, cell #0-1, cell #0-2, cell #0-3, and cell #0-4.

When an activated TCI state is applied to the frequency corresponding to SCell #1, the same TCI state ID (or the same cell ID/resource RS index for each frequency) may be applied to the frequency of SCell #1.

In this case, association between cell indices of different frequencies may be configured/defined. The association may be implicit (for example, Implicit association) or may be explicit (for example, Explicit association).

As the implicit association, cell index #x (for example, cell (re-)index #x) of f0 may be associated with cell index #x (for example, cell (re-)index #x) of f1, for example. As an example, candidate cell #0-2 of f0 may be associated with candidate cell #1-2 of f1.

As the explicit association, a plurality of cells (for example, cells of different frequencies) to which the same TCI state is applied in different frequencies may be associated by higher layer signaling.

A UE capability related to support of such association between cells of different frequencies may be introduced. For an additional PCI cell scenario, a UE capability related to whether to support application of TCI states described above may be introduced.

### <<Configuration Example #1>>

TCI state candidates (also referred to as a TCI state pool) configurable for a serving cell/candidate cell may be cell- (or CC-)specific. When the TCI state pool is CC-specific, TCI state ID for each CC/frequency may be started from a certain value (for example, 0). A resource RS (for example, a QCL type A/D RS) may have a BWP/CC ID of each frequency.

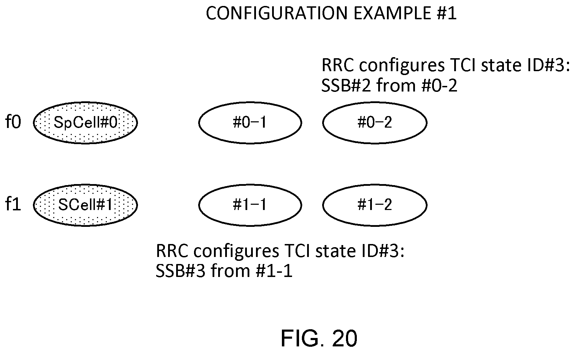

For example, assume a case where TCI state #3 includes a resource (for example, SSB #2) from candidate cell #0-2 for f0 and where TCI state #3 includes a resource (SSB #3) from candidate cell #1-1 for f1 (see FIG. 20).

FIG. 20 shows a case where SpCell #0 and candidate cells #0-1 and #0-2 are configured in f0 and where SCell #1 and candidate cells #1-1 and #1-2 are configured in f1. Also shown is a case where TCI state ID #3 is configured for candidate cell #0-2 (from which SSB #2 is transmitted) by a higher layer parameter and where TCI state ID #3 is configured for candidate cell #1-1 (from which SSB #3 is transmitted) by a higher layer parameter.

In this case, when a MAC CE activates at least TCI state #3, this may mean that TCI state #3 is activated for each frequency (different CC/each TCI pool of the frequency).

When L1/L2 cell switch signaling indicates candidate cell #1-1 as a target cell and indicates TCI state ID #3 as a TCI state, TCI state ID #3 in the frequency f1 corresponding to candidate cell #1-1 may be applied.

In the example shown in FIG. 20, it may be supported that identical TCI state IDs of respective CCs have different resource RSs and cell IDs.

### <<Configuration Example #2>>

TCI state candidates (also referred to as a TCI state pool) configurable for a serving cell/candidate cell may be cell- (or CC-)common. When the TCI state pool is CC-common, a TCI state ID may be configured for a reference BWP/CC.

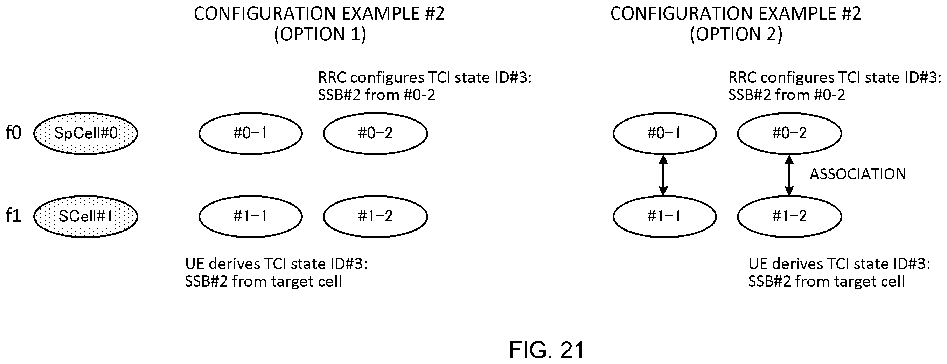

For example, assume a case where TCI state ID #3 includes a resource (for example, SSB #2) from candidate cell #0-2 for f0 (see FIG. 21).

FIG. 21 shows a case where SpCell #0 and candidate cells #0-1 and #0-2 are configured in f0 and where SCell #1 and candidate cells #1-1 and #1-2 are configured in f1. Also shown is a case where TCI state ID #3 is configured for candidate cell #0-2 (from which SSB #2 is transmitted) by a higher layer parameter.

In this case, when a MAC CE activates at least TCI state #3, and L1/L2 cell switch signaling indicates candidate cell #1-1 as a target cell and indicates TCI state ID #3 as a TCI state, at least one of option B-1 and option B-2 below may be applied.

### {{Option B-1}}

A QCL resource RS ID may be SSB #2 from candidate cell #1-1. In other words, the same resource RS index from a target cell (or a candidate cell) may correspond to a CL resource RS ID.

### {{Option B-2}}

Association between candidate cell #0-2 and candidate cell #1-2 may be configured implicitly/explicitly. In this case, only candidate cell #1-2 may correspond to TCI state ID #3 in f1. When L1/L2 cell switch signaling indicates candidate cell #1-2 as a target cell and indicates TCI state ID #3 as a TCI state, a QCL resource RS ID corresponds to SSB #2 from candidate cell #1-2.

When a TCI state ID is indicated for a target cell in a case where candidate cells of different frequencies are associated, the TCI state ID of a reference CC (or cell) may have a resource RS from a cell having a cell ID associated as a target cell.

### <Fourth Embodiment>

In a fourth embodiment, an example of configuration of synchronization (Sync) and asynchronization (Async) in L1/L2 intra-cell mobility (for example, cell switch) in consideration of intra-cell multi-TRP/inter-cell multi-TRP will be described.

In Rel. 18 or later versions, it is assumed to support configuration of TA per TRP for multi-DCI based multi-TRP (for example, mDCI MTRP). Both intra-cell multi-TRP and inter-cell multi-TRP may be supported. For example, for multi-DCI based multi-TRP operation supporting a plurality of (for example, two) TAs, configuration of two timing advance groups (TAGs) belonging to a serving cell is supported.

In L1/L2 inter-cell mobility, different TAGs may be configured for a serving cell/candidate cell.

In L1/L2 inter-cell mobility, at least one of intra-cell multi-TRP (for example, a case where two TRPs share the same PCI) and inter-cell multi-TRP (for example, a case where two TRPs have different PCIs (similar to multi-DCI based multi-TRP of Rel. 17/18)) may be supported.

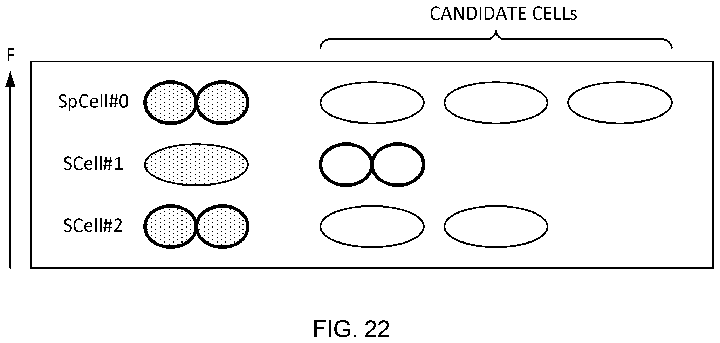

FIG. 22 is a diagram to show an example of intra-cell multi-TRP and inter-cell multi-TRP. Here, shown is a case where multi-TRP (here, two TRPs) is configured for SpCell #0 and SCell #2 and multi-TRP (here, two TRPs) is configured for a candidate cell corresponding to the same frequency domain as that of SCell #1. Information related to the serving cells/candidate cell configured with multi-TRP may be configured for/indicated to a UE by a base station by a higher layer parameter/MAC CE/DCI or the like.

In the case of intra-cell multi-TRP, two TRPs corresponding to each cell may correspond to two respective TCI states associated with one PCI. In the case of inter-cell multi-TRP, two TRPs corresponding to different cells may correspond to two respective TCI states associated with two respective PCIs.

As presence or absence of support/configuration of intra-cell multi-TRP and inter-cell multi-TRP and a configuration of synchronization/asynchronization for L1/L2 inter-cell mobility, at least one of option 4-1 to option 4-10 below may be employed.

### {Option 4-1}

For a serving cell (for example, an SpCell/SCell), configuration of intra-cell multi-TRP (for example, intra-cell MTRP) may be supported. For the intra-cell multi-TRP, configuration of synchronization/asynchronization (for example, sync/async) may be supported.

When synchronization is configured for the intra-cell multi-TRP, this may mean that a plurality of (for example, two) TRPs in a cell are synchronized (for example, belong to the same TAG). When asynchronization is configured for the intra-cell multi-TRP, this may mean that a plurality of (for example, two) TRPs in a cell are asynchronized (for example, belong to different TAGs).

The configuration of intra-cell multi-TRP may be configured for the UE by the base station by a higher layer parameter or the like. Information related to synchronization/asynchronization (for example, belonging to the same TAG/belonging to different TAGs) between a plurality of TRPs in a cell may be indicated by a random access response or may be indicated by RRC/MAC CE/DCI.

### {Option 4-2}

For a serving cell (for example, an SpCell/SCell), configuration of inter-cell multi-TRP (for example, inter-cell MTRP) may be supported. For the inter-cell multi-TRP, configuration of synchronization/asynchronization (for example, sync/async) may be supported.

When synchronization is configured for the inter-cell multi-TRP, this may mean that a plurality of (for example, two) TRPs between cells are synchronized (for example, belong to the same TAG). When asynchronization is configured for the inter-cell multi-TRP, this may mean that a plurality of (for example, two) TRPs between cells are asynchronized (for example, belong to different TAGs).

The configuration of inter-cell multi-TRP may be configured for the UE by the base station by a higher layer parameter or the like. Information related to synchronization/asynchronization (for example, belonging to the same TAG/belonging to different TAGs) between a plurality of TRPs between cells may be indicated by a random access response or may be indicated by RRC/MAC CE/DCI.

Both option 4-1 and option 4-2 may be supported. For example, a case where two TRPs belong to the same TAG in a case of intra-cell multi-TRP while two TRPs belong to different TAGs in a case of inter-cell multi-TRP may be supported.

### {Option 4-3}

For a serving cell (for example, an SpCell/SCell), configuration of intra-cell multi-TRP (for example, intra-cell MTRP) need not be supported. For the intra-cell multi-TRP, configuration of synchronization/asynchronization (for example, sync/async) need not be supported.

### {Option 4-4}

For a serving cell (for example, an SpCell/SCell), configuration of inter-cell multi-TRP (for example, inter-cell MTRP) need not be supported. For the intra-cell multi-TRP, configuration of synchronization/asynchronization (for example, sync/async) need not be supported.

### {Option 4-5}

Option 4-1 to option 4-4 may be combined appropriately. For example, it may be configured to support both configuration of (sync/async) intra-cell multi-TRP and configuration of (sync/async) inter-cell multi-TRP (option 4-1 + option 4-2). Alternatively, it may be configured to support configuration of (sync/async) intra-cell multi-TRP and not to support configuration of (sync/async) inter-cell multi-TRP (option 4-1 + option 4-4). Alternatively, it may be configured not to support configuration of (sync/async) intra-cell multi-TRP and to support configuration of (sync/async) inter-cell multi-TRP (option 4-2 + option 4-3).

### {Option 4-6}

For a candidate cell, configuration of intra-cell multi-TRP (for example, intra-cell MTRP) may be supported. For the intra-cell multi-TRP, configuration of synchronization/asynchronization (for example, sync/async) may be supported.

When synchronization is configured for the intra-cell multi-TRP, this may mean that a plurality of (for example, two) TRPs in a candidate cell are synchronized (for example, belong to the same TAG). When asynchronization is configured for the intra-cell multi-TRP, this may mean that a plurality of (for example, two) TRPs in a candidate cell are asynchronized (for example, belong to different TAGs).

The configuration of intra-cell multi-TRP may be configured for the UE by the base station by a higher layer parameter or the like. Information related to synchronization/asynchronization (for example, belonging to the same TAG/belonging to different TAGs) between a plurality of TRPs in a candidate cell may be indicated by a random access response or may be indicated by RRC/MAC CE/DCI.

### {Option 4-7}

For a candidate cell, configuration of inter-cell multi-TRP (for example, inter-cell MTRP) may be supported. For the inter-cell multi-TRP, configuration of synchronization/asynchronization (for example, sync/async) may be supported.

When synchronization is configured for the inter-cell multi-TRP, this may mean that a plurality of (for example, two) TRPs between candidate cells are synchronized (for example, belong to the same TAG). When asynchronization is configured for the inter-cell multi-TRP, this may mean that a plurality of (for example, two) TRPs between candidate cells are asynchronized (for example, belong to different TAGs).

The configuration of inter-cell multi-TRP may be configured for the UE by the base station by a higher layer parameter or the like. Information related to synchronization/asynchronization (for example, belonging to the same TAG/belonging to different TAGs) between a plurality of TRPs between candidate cells may be indicated by a random access response or may be indicated by RRC/MAC CE/DCI.

Both option 4-6 and option 4-7 may be supported. For example, a case where two TRPs in a candidate cell belong to the same TAG in a case of intra-cell multi-TRP while two TRPs between candidate cells belong to different TAGs in a case of inter-cell multi-TRP may be supported.

### {Option 4-8}

For a candidate cell, configuration of intra-cell multi-TRP (for example, intra-cell MTRP) need not be supported. For the intra-cell multi-TRP, configuration of synchronization/asynchronization (for example, sync/async) need not be supported.

### {Option 4-9}

For a candidate cell, configuration of inter-cell multi-TRP (for example, inter-cell MTRP) need not be supported. For the intra-cell multi-TRP, configuration of synchronization/asynchronization (for example, sync/async) need not be supported.

### {Option 4-10}

Option 4-6 to option 4-9 may be combined appropriately. For example, it may be configured for candidate cell/cell group switch to support both configuration of (sync/async) intra-cell multi-TRP and configuration of (sync/async) inter-cell multi-TRP (option 4-6 + option 4-7). Alternatively, it may be configured for candidate cell/cell group switch to support configuration of (sync/async) intra-cell multi-TRP and not to support configuration of (sync/async) inter-cell multi-TRP (option 4-6 + option 4-9). Alternatively, it may be configured for candidate cell/cell group switch not to support configuration of (sync/async) intra-cell multi-TRP and to support configuration of (sync/async) inter-cell multi-TRP (option 4-7 + option 4-8).

### {Variations}

In option 4-6 to option 4-10, whether a candidate cell for SpCell switch or a candidate cell for SCell switch may be specified for a candidate cell. In this case, presence or absence of configuration of intra-cell multi-TRP/inter-cell multi-TRP (or synchronization/asynchronization) may be configured separately for a candidate cell corresponding to an SpCell and a candidate cell corresponding to an SCell (or each SCell).

Alternatively, presence or absence of configuration of intra-cell multi-TRP/inter-cell multi-TRP (or synchronization/asynchronization) may be configured commonly for a candidate cell corresponding to an SpCell and a candidate cell corresponding to an SCell (or each SCell).

In option 4-1 to option 4-10, only one of synchronization and asynchronization (for example, synchronization) may be supported. For example, a UE capability related to synchronization may be supported as a basic UE capability, and a UE capability related to asynchronization may be supported separately from the UE capability related to synchronization (or in addition to the UE capability related to synchronization).

### <Supplements>

At least one of the above-described embodiments may be applied only to a UE that has reported specific UE capability or that supports the specific UE capability.

The specific UE capability may indicate at least one of the following:
- support of specific UE operation when cell switch has failed
- support of collision between L1/L2 inter-cell mobility procedure/operation and L3 mobility procedure/operation
- support of intra-frequency cell switch when a TCI state(s) activated by a MAC CE is associated with a serving cell/candidate cell(s) corresponding to the same frequency domain
- support of inter-frequency cell switch when a TCI state(s) activated by a MAC CE is associated with a serving cell/candidate cell(s) corresponding to the same frequency domain
- TCI state(s) activated by a MAC CE being associated with a serving cell/candidate cell(s) corresponding to a different frequency domain, and the maximum number of frequency domains, the maximum number of candidate cells, and the maximum number of cells per frequency in such a case
- support of configuration of intra-cell multi-TRP/inter-cell multi-TRP for a serving cell
- support of configuration of intra-cell multi-TRP/inter-cell multi-TRP for a candidate cell

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or per frequency division duplex (FDD)).

At least one of the above-described embodiments may be applied when the UE is configured with specific information related to the above-described embodiment by higher layer signaling.

The UE may apply, for example, Rel-15/16/17 operation when the UE does not support at least one of the specific UE capabilities or is not configured with the specific information.

### (Supplementary Notes)

Regarding one embodiment of the present disclosure, the following supplementary notes of the invention will be given.

### {Supplementary Note 1-1}

A terminal including: a receiving section that receives at least one of downlink control information and a MAC CE (MAC Control Element) including cell switch indication information for switch from a serving cell to a candidate cell; and a control section that determines whether the switch from the serving cell to the candidate cell has been successful or has failed, based on at least one of transmission of an ACK (ACKnowledgement) for the cell switch indication information and reception of DL transmission from the candidate cell in a certain window or timer period after reception of the cell switch indication information.

### {Supplementary Note 1-2}

The terminal according to supplementary note 1-1, wherein the certain window or timer is started after the transmission of the ACK or a certain period after the transmission of the ACK.

### {Supplementary Note 1-3}

The terminal according to supplementary note 1-1 or 1-2, wherein, when the DL transmission from the candidate cell fails to be received/when a random access procedure is not completed, in the certain window or timer period, the control section determines that the switch from the serving cell to the candidate cell has failed.

### {Supplementary Note 1-4}

The terminal according to any one of supplementary notes 1-1 to 1-3, wherein, when the switch from the serving cell to the candidate cell has failed, the control section performs control to perform a random access procedure on at least one of the serving cell and the candidate cell.

### {Supplementary Note 2-1}

A terminal including: a receiving section that receives at least one of first indication information indicating an L1/L2 inter-cell mobility procedure and second indication information indicating an L3 mobility procedure; and a control section that controls the L1/L2 inter-cell mobility procedure, based on the first indication information while controlling the L3 mobility procedure, based on the second indication information, wherein the control section performs control not to perform the L1/L2 inter-cell mobility procedure and the L3 mobility procedure simultaneously.

### {Supplementary Note 2-2}

The terminal according to supplementary note 2-1, wherein the control section assumes not to receive the second indication information when the L1/L2 inter-cell mobility procedure is ongoing, and assumes not to receive the first indication information when the L3 mobility procedure is ongoing.

### {Supplementary Note 2-3}

The terminal according to supplementary note 2-1 or 2-2, wherein the control section prioritizes a specific procedure when the L1/L2 inter-cell mobility procedure and the L3 mobility procedure collide.

### {Supplementary Note 2-4}

The terminal according to any one of supplementary notes 2-1 to 2-3, wherein the control section prioritizes a procedure indicated later, when the L1/L2 inter-cell mobility procedure and the L3 mobility procedure collide.

### {Supplementary Note 3-1}

A terminal including: a receiving section that receives a MAC CE (MAC Control Element) including information related to respective active transmission configuration indication (TCI) states associated with a serving cell and one or more candidate cells corresponding to the serving cell; and a control section that determines the TCI state corresponding to the serving cell and the TCI state corresponding to each of the one or more candidate cells, based on the MAC CE, wherein a TCI state to be activated by the MAC CE is associated with a candidate cell corresponding at least to a same frequency domain as that of the serving cell.

### {Supplementary Note 3-2}

The terminal according to supplementary note 3-1, wherein respective TCI states to be activated by the MAC CE are associated with the candidate cell corresponding to the same frequency domain as that of the serving cell and a candidate cell corresponding to a frequency domain different from that of the serving cell.

### {Supplementary Note 3-3}

The terminal according to supplementary note 3-1 or 3-2, wherein, when a plurality of serving cells are configured, at least either active TCI states associated with the plurality of respective serving cells or one or more active TCI states associated with one or more respective candidate cells corresponding to each of the plurality of serving cells are indicated by one MAC CE.

### {Supplementary Note 3-4}

The terminal according to any one of supplementary notes 3-1 to 3-3, wherein, based on a TCI state ID indicated for a serving cell corresponding to a frequency domain by the MAC CE, the control section determines a TCI state corresponding to at least one of a serving cell and a candidate cell corresponding to another frequency domain.

### {Supplementary Note 4-1}

A terminal including: a receiving section that receives at least one of downlink control information and a MAC CE (MAC Control Element) including cell switch indication information for switch from a serving cell to a candidate cell; and a control section that controls cell switch operation, wherein at least one of the serving cell and the candidate cell is configured with at least one of an intra-cell multi-transmission/reception point and inter-cell multi-transmission/reception point.

### {Supplementary Note 4-2}

The terminal according to supplementary note 4-1, wherein, when the intra-cell multi-transmission/reception point is configured, a plurality of transmission/reception points included in at least one of the serving cell and the candidate cell are configured to be synchronized or asynchronized.

### {Supplementary Note 4-3}

The terminal according to supplementary note 4-1 or 4-2, wherein, when the inter-cell multi-transmission/reception point is configured, at least either a plurality of transmission/reception points included in each of a plurality of serving cells or a plurality of transmission/reception points included in each of a plurality of candidate cells are configured to be synchronized or asynchronized.

### {Supplementary Note 4-4}

The terminal according to any one of supplementary notes 4-1 to 4-3, wherein, when both configurations of the intra-cell multi-transmission/reception point and the inter-cell multi-transmission/reception point are supported, configuration of a plurality of transmission/reception points included in a cell in a same timing advance group and configuration of a plurality of transmission/reception points included in each different cell in a different timing advance group are supported.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

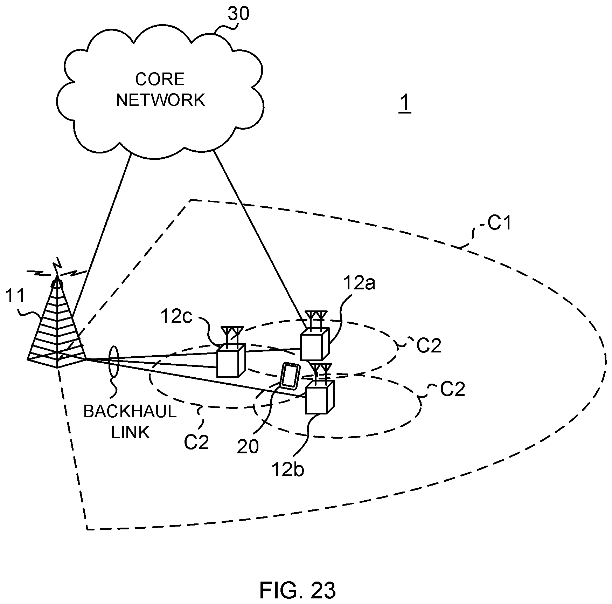

FIG. 23 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

### (Base Station)

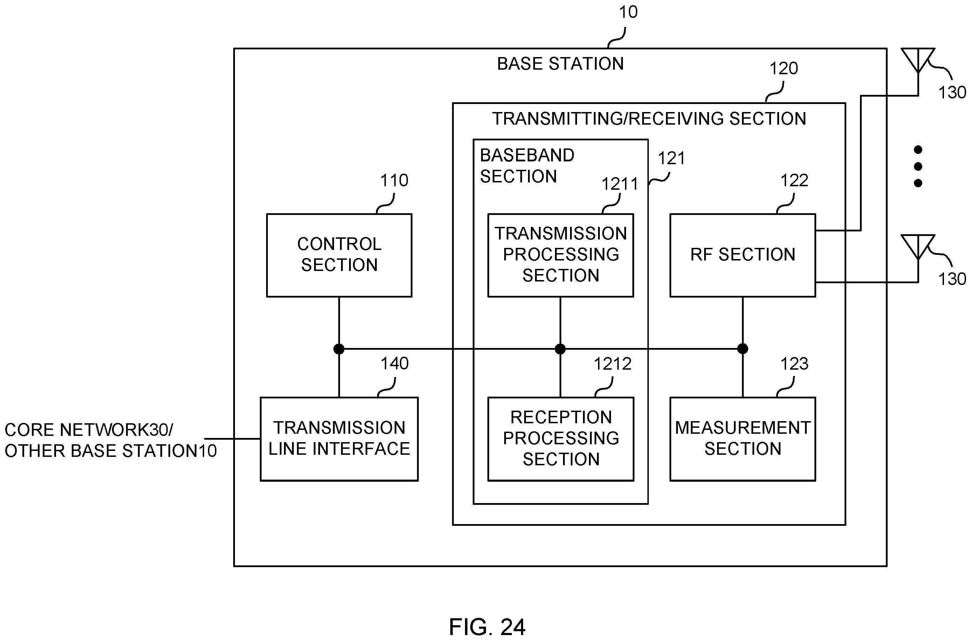

FIG. 24 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit, to a terminal, at least one of downlink control information and a MAC CE (MAC Control Element) including cell switch indication information for switch from a serving cell to a candidate cell. The control section 110 may determine whether the switch from the serving cell to the candidate cell has been successful or has failed, based on an ACK (ACKnowledgement) for the cell switch indication information, the ACK being transmitted from the terminal.

The transmitting/receiving section 120 may transmit at least one of first indication information indicating an L1/L2 inter-cell mobility procedure and second indication information indicating an L3 mobility procedure. The control section 110 may control transmission of the first indication information and the second indication information so that the L1/L2 inter-cell mobility procedure and the L3 mobility procedure do not collide.

The transmitting/receiving section 120 may transmit a MAC CE (MAC Control Element) including information related to respective active transmission configuration indication (TCI) states associated with a serving cell and one or more candidate cells corresponding to the serving cell. The control section 110 may indicate the TCI state corresponding to the serving cell and the TCI state corresponding to each of the one or more candidate cells, based on the MAC CE. A TCI state(s) activated by the MAC CE may be associated with a candidate cell(s) corresponding at least to the same frequency domain as that of the serving cell.

The transmitting/receiving section 120 may transmit at least one of downlink control information and a MAC CE (MAC Control Element) including cell switch indication information for switch from a serving cell to a candidate cell. The control section 110 may indicate cell switch operation by using the cell switch indication information. At least one of the serving cell and the candidate cell may be configured with at least one of intra-cell multi-transmission/reception point and inter-cell multi-transmission/reception point.

### (User Terminal)

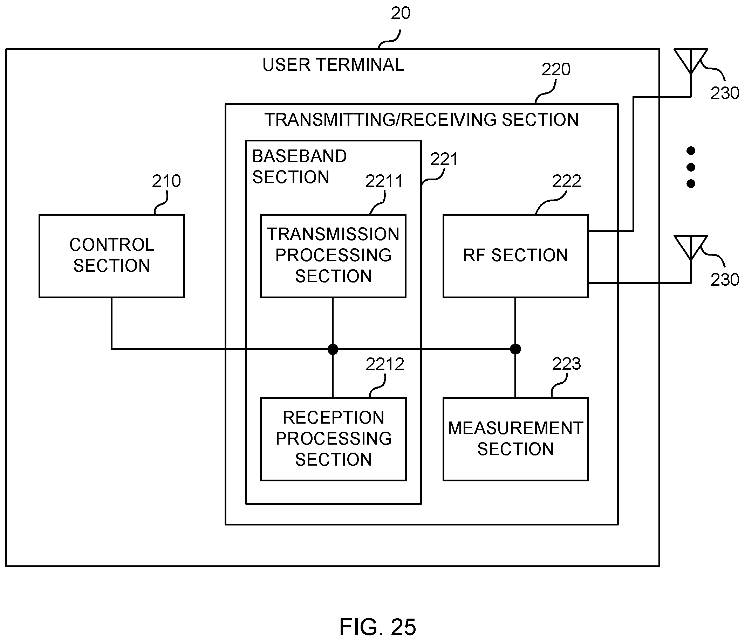

FIG. 25 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive at least one of downlink control information and a MAC CE (MAC Control Element) including cell switch indication information for switch from a serving cell to a candidate cell. The control section 210 may determine whether the switch from the serving cell to the candidate cell has been successful or has failed, based on at least one of transmission of an ACK (ACKnowledgement) for the cell switch indication information and reception of DL transmission from the candidate cell in a certain window or timer period after reception of the cell switch indication information. The certain window or timer may be started after the transmission of the ACK or a certain period after the transmission of the ACK. When the DL transmission from the candidate cell fails to be received/when a random access procedure is not completed, in the certain window or timer period, the control section 210 may determine that the switch from the serving cell to the candidate cell has failed. When the switch from the serving cell to the candidate cell has failed, the control section 210 may perform control to perform a random access procedure on at least one of the serving cell and the candidate cell.

The transmitting/receiving section 220 may receive at least one of first indication information indicating an L1/L2 inter-cell mobility procedure and second indication information indicating an L3 mobility procedure. The control section 210 may control the L1/L2 inter-cell mobility procedure, based on the first indication information, and control the L3 mobility procedure, based on the second indication information. The control section 210 may perform control (or assume) not to perform the L1/L2 inter-cell mobility procedure and the L3 mobility procedure simultaneously. The control section 210 may assume not to receive the second indication information when the L1/L2 inter-cell mobility procedure is ongoing. The control section 210 may assume not to receive the first indication information when the L3 mobility procedure is ongoing. The control section 210 may prioritize a specific procedure when the L1/L2 inter-cell mobility procedure and the L3 mobility procedure collide. The control section 210 may prioritize a procedure indicated later, when the L1/L2 inter-cell mobility procedure and the L3 mobility procedure collide.

The transmitting/receiving section 220 may receive a MAC CE (MAC Control Element) including information related to respective active transmission configuration indication (TCI) states associated with a serving cell and one or more candidate cells corresponding to the serving cell. The control section 210 may determine the TCI state corresponding to the serving cell and the TCI state corresponding to each of the one or more candidate cells, based on the MAC CE. A TCI state(s) activated by the MAC CE may be associated with a candidate cell(s) corresponding at least to the same frequency domain as that of the serving cell. Respective TCI states to be activated by the MAC CE may be associated with the candidate cell corresponding to the same frequency domain as that of the serving cell and a candidate cell corresponding to a frequency domain different from that of the serving cell. When a plurality of serving cells are configured, at least either active TCI states associated with the plurality of respective serving cells or one or more active TCI states associated with one or more respective candidate cells corresponding to each of the plurality of serving cells may be indicated by one MAC CE. Based on a TCI state ID indicated for a serving cell corresponding to a frequency domain by the MAC CE, the control section 210 may determine a TCI state corresponding to at least one of a serving cell and a candidate cell corresponding to another frequency domain.

The transmitting/receiving section 220 may receive at least one of downlink control information and a MAC CE (MAC Control Element) including cell switch indication information for switch from a serving cell to a candidate cell. The control section 210 may control cell switch operation, based on the cell switch indication information. At least one of the serving cell and the candidate cell may be configured with at least one of intra-cell multi-transmission/reception point and inter-cell multi-transmission/reception point. When the intra-cell multi-transmission/reception point is configured, a plurality of transmission/reception points included in at least one of the serving cell and the candidate cell may be configured to be synchronized or asynchronized. When the inter-cell multi transmission/reception point is configured, at least either a plurality of transmission/reception points included in each of a plurality of serving cells and a plurality of transmission/reception points included in each of a plurality of candidate cells may be configured to be synchronized or asynchronized. When both configurations of the intra-cell multi-transmission/reception point and the inter-cell multi-transmission/reception point are supported, configuration of a plurality of transmission/reception points included in a cell in a same timing advance group and configuration of a plurality of transmission/reception points included in each different cell in a different timing advance group may be supported.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

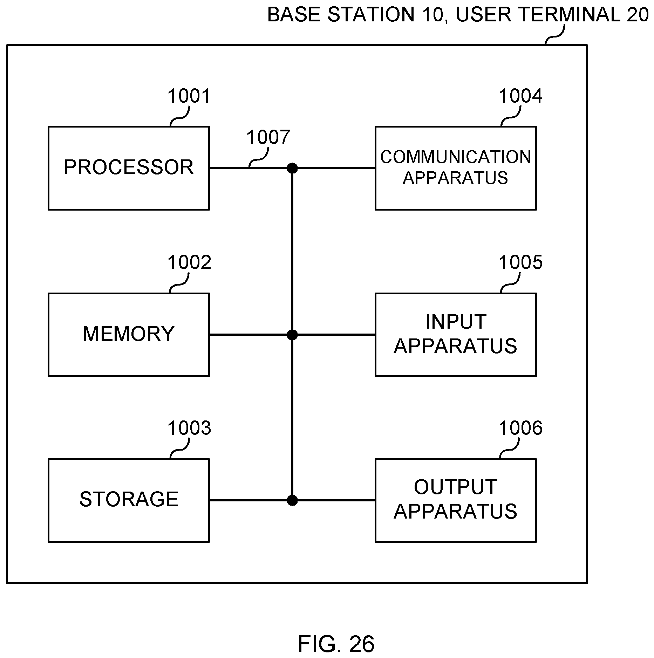

For example, a base station, a user terminal, and so on according to one embodiment of the present disclosure may function as a computer that executes the processes of the radio communication method of the present disclosure. FIG. 26 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

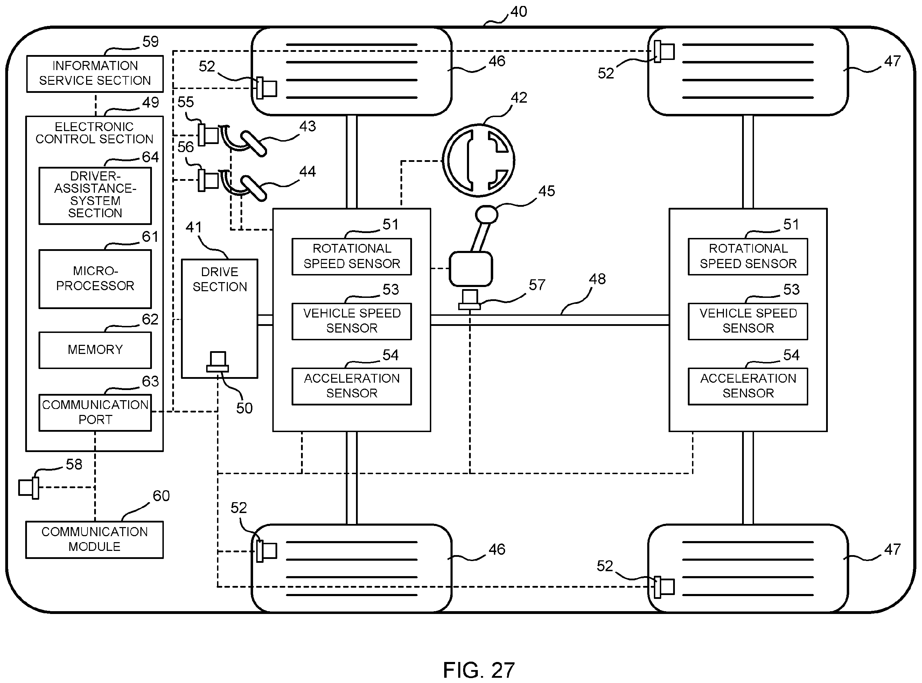

FIG. 27 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives a MAC CE (MAC Control Element) including information related to respective active transmission configuration indication (TCI) states associated with a serving cell and one or more candidate cells corresponding to the serving cell; and
a control section that determines the TCI state corresponding to the serving cell and the TCI state corresponding to each of the one or more candidate cells, based on the MAC CE, wherein
a TCI state to be activated by the MAC CE is associated with a candidate cell corresponding at least to a same frequency domain as that of the serving cell.

2. The terminal according to claim 1, wherein
respective TCI states to be activated by the MAC CE are associated with the candidate cell corresponding to the same frequency domain as that of the serving cell and a candidate cell corresponding to a frequency domain different from that of the serving cell.

3. The terminal according to claim 1, wherein
when a plurality of serving cells are configured, at least either active TCI states associated with the plurality of respective serving cells or one or more active TCI states associated with one or more respective candidate cells corresponding to each of the plurality of serving cells are indicated by one MAC CE.

4. The terminal according to claim 1, wherein
based on a TCI state ID indicated for a serving cell corresponding to a frequency domain by the MAC CE, the control section determines a TCI state corresponding to at least one of a serving cell and a candidate cell corresponding to another frequency domain.

5. A radio communication method for a terminal, the radio communication method comprising:
receiving a MAC CE (MAC Control Element) including information related to respective active transmission configuration indication (TCI) states associated with a serving cell and one or more candidate cells corresponding to the serving cell; and
determining the TCI state corresponding to the serving cell and the TCI state corresponding to each of the one or more candidate cells, based on the MAC CE, wherein
a TCI state to be activated by the MAC CE is associated with a candidate cell corresponding at least to a same frequency domain as that of the serving cell.

6. A base station comprising:
a transmitting section that transmits a MAC CE (MAC Control Element) including information related to respective active transmission configuration indication (TCI) states associated with a serving cell and one or more candidate cells corresponding to the serving cell; and
a control section that indicates the TCI state corresponding to the serving cell and the TCI state corresponding to each of the one or more candidate cells, based on the MAC CE, wherein
a TCI state to be activated by the MAC CE is associated with a candidate cell corresponding at least to a same frequency domain as that of the serving cell.
